# FASCICULE DE BREVET EUROPEEN

(11) **EP 2 480 866 B1**
(45) Date de publication et mention de la délivrance du brevet: **01.05.2013**
(21) Numéro de dépôt: 10759819.5
(22) Date de dépôt: 22.09.2010
(51) Int. Cl.: G01J 3/26, G02B 26/00, H01S 3/086, H01S 3/139

(54) **PROCEDE DE STABILISATION DE LA LONGUEUR D'UNE CAVITE OPTIQUE**
VERFAHREN ZUR LÄNGSSTABILISIERUNG EINER OPTISCHEN KAVITÄT
METHOD FOR LONGITUDINALLY STABILIZING AN OPTICAL CAVITY

(30) Priorité: 23.09.2009 FR 0904537
(43) Date de publication de la demande: 01.08.2012
(73) Titulaire: Université Pierre et Marie Curie - Paris 6, 75005 Paris (FR); Centre National de la Recherche Scientifique CNRS, 75016 Paris (FR); Ecole Normale Supérieure, 75005 Paris (FR)
(72) Inventeur: PINEL, Olivier, F-75014 Paris (FR); CHALOPIN, Benoît, 31400 Toulouse (FR); TREPS, Nicolas, F-75011 PARIS (FR)
(74) Mandataire: Parzy, Benjamin Alain
(86) Numéro de dépôt international: PCT/EP2010/005795
(87) Numéro de publication internationale: WO 2011/035897

(56) Documents cités:
- EP-A1- 1 936 339
- US-A1- 2002 044 574

## Description

L'invention est relative à un procédé de stabilisation de la longueur d'une cavité optique de type Fabry-Perot.

### ARRIERE-PLAN TECHNOLOGIQUE

Une telle cavité optique comprend au moins deux miroirs en regard dont au moins un miroir est associé à un actionneur de déplacement (généralement de type piézoélectrique) en vue d'ajuster la distance entre les miroirs de sorte qu'elle corresponde à un multiple de la longueur d'onde de la source de lumière injectée dans la cavité.

Il apparaît en effet que cette distance peut varier sous l'effet de divers facteurs non contrôlés (vibrations mécaniques, dilatations thermiques...), et il importe de pouvoir déplacer l'un des miroirs pour ramener la distance entre les miroirs à la valeur désirée.

A cette fin, on connaît tout d'abord le procédé dit PDH (pour Pound, Drever, Hall, du nom de ses inventeurs) qui consiste à moduler la phase du faisceau incident, et mixer le signal modulé avec le faisceau issu de la cavité de façon à créer un signal d'erreur représentatif d'une différence entre la fréquence de la cavité (directement liée à la distance entre les miroirs) et la fréquence du faisceau. Le miroir mobile est asservi de telle sorte que le signal d'erreur soit annulé. Ce procédé est décrit dans Drever, Hall, Kowalski, Hough, Ford, Munley, Ward, Laser phase and frequency stabilization using an optical resonator, Appl. Phys. B: Lasers Opt., 1983, Volume 31, Number 2, pp. 97-105.

Cependant, une telle méthode n'est pas utilisable simplement avec des lasers à impulsion, puisque le matériau modulateur généralement utilisé déforme les impulsions. Qui plus est, un tel matériau présente un coût élevé.

On connaît également le procédé dit Hänsch-Couillaud qui consiste à polariser le faisceau incident pour générer des interférences dans la cavité. Ces interférences sont mesurées par un détecteur dont le signal est utilisé pour asservir la position du miroir mobile. Ce procédé de réglage est extrêmement sensible et est peu compatible avec une exploitation industrielle. Ce procédé est décrit dans Hänsch, Couillaud, Laser frequency stabilization by polarization spectroscopy of a reflecting reference cavity, Opt. Commun., 1980, Volume 35, Issue 3, pp. 441-444.

On connaît également le procédé dit « tilt-locking » qui consiste à provoquer une légère déviation du faisceau incident pour exciter la cavité avec deux modes transverses, donnant lieu à interférences. Ces interférences sont mesurées par un détecteur à deux zones, dont le signal est utilisé pour asservir la position du miroir mobile. Ce procédé est décrit dans Shaddock, Gray, McClelland, Frequency locking a laser to an optical cavity by use of spatial mode interference, Opt. Lett. 1999, Vol 24, pp. 1499-1501.

Ces procédés peuvent être mis en oeuvre aussi bien pour des lasers à cavité passive que pour des lasers à cavité active.

Enfin, il a été proposé de d'utiliser le spectre du faisceau sortant de la cavité d'un oscillateur paramétrique optique. En effet, ce spectre dépend de la dispersion de vitesse de groupe à l'intérieur de la cavité causée par la présence du cristal non linéaire à l'intérieur de la cavité. Pour ce faire, on prélève une partie du rayonnement émis que l'on dirige vers un réseau de diffraction. Le faisceau diffracté est alors dirigé vers un détecteur de type PSD (pour position sensitive detector), dont on utilise le signal pour asservir la position du miroir mobile de la cavité. En particulier, on règle l'asservissement pour que la distance désirée corresponde à une situation pour laquelle le faisceau touche le détecteur en son centre.

Cette méthode est décrite dans Butterworth, Girard, Hanna, A simple technique to achieve cavity-length stabilization in a synchronously pumped optical parametric oscillator, Optics Communications, Elsevier, 1996, Vol 123(4-6), pp. 577-582. Cette méthode est simple et peu coûteuse, mais ne peut être appliquée qu'à des oscillateurs paramétriques à cavité active.

Enfin, dans un domaine éloigné de la stabilisation des cavités optiques, il a été suggéré, dans l'article Gohle, Stein, Schliesser, Hänsch, Frequency Comb Vernier Spectroscopy for broadband, high-resolution, high-sensitivity absorption and dispersion spectra, Physical Review Letters, APS, 2007, Vol. 99(26), pp. 263902, de réaliser une spectroscopie en injectant dans un résonateur de Fabry-Perot contenant l'échantillon à analyser un peigne de fréquences femtoseconde. La longueur de la cavité est choisie de sorte que chaque m-ième mode du peigne soit résonnant avec la n-ième mode de la cavité. On obtient ainsi un effet Vernier de rapport m/n.

### OBJET DE L'INVENTION

L'invention a pour objet de proposer un procédé de réglage de la distance entre les miroirs d'une cavité optique qui soit très simple et peu coûteuse à mettre en oeuvre, et qui puisse être mise en oeuvre

### BREVE DESCRIPTION DE L'INVENTION

En vue de la réalisation de ce but, on propose un Procédé de stabilisation de la distance entre deux miroirs d'une cavité optique, le procédé comportant les étapes de :
- injecter dans la cavité un faisceau lumineux incident sous la forme d'un peigne de fréquences ;
- observer le spectre de la lumière transmise ou de la lumière réfléchie par la cavité à l'aide d'une photodiode à au moins deux zones sensibles disposée par rapport à la lumière transmise ou réfléchie de sorte que lorsque le spectre est centré, les deux zones sensibles de la photodiode sont également éclairées;
- modifier la distance entre les miroirs de la cavité de façon à annuler un décalage dudit spectre par rapport à une situation dans laquelle ledit spectre est centré.

Pour que la cavité soit en résonnance avec le faisceau incident, il convient que sa longueur soit égale à la distance entre deux impulsions successives. Cependant, si les impulsions du faisceau incident sont suffisamment longues (typiquement plus de 10 fois la longueur d'onde centrale), la résonnance est encore obtenue pour une longueur de cavité ne différant que de quelques longueurs d'onde de la longueur correspondant à la résonnance centrale. Si la longueur de la cavité correspond à l'une des longueurs provoquant une telle résonnance, alors le spectre de la lumière transmise ou de la lumière réfléchie par la cavité optique est sensiblement centré, sans décalage.

Si la longueur de la cavité n'est pas exactement égale à l'une des longueurs provoquant une résonnance, alors la lumière transmise ou la lumière réfléchie présente un spectre décalé qui semble être dû à un effet Vernier entre les fréquences du peigne du faisceau injecté et les fréquences propres de la cavité. Il suffira dès lors de corriger la distance entre les miroirs dans le sens adéquat pour annuler ce décalage. On a ainsi créé un asservissement de la distance entre les miroirs à une valeur correspondant à un spectre centré.

Ainsi, contrairement à la photodiode de l'article Spectroscopy for broadband, high-resolution, high-sensitivity absorption and dispersion spectra, Physical Review Letters qui est uniquement employée pour réaliser une spectroscopie d'un échantillon, la photodiode à au moins deux zones sensibles permet ici d'asservir la distance entre les miroirs afin de stabiliser la cavité optique.

En pratique, la lumière transmise ou la lumière réfléchie est ici diffractée à l'aide d'un réseau de diffraction, le faisceau diffracté étant recueilli par la photodiode à quadrants disposée par rapport au faisceau diffracté de sorte que lorsque le spectre est centré, les deux zones sensibles de la photodiode sont également éclairées.

### BREVE DESCRIPTION DES FIGURES

L'invention sera mieux comprise à la lumière de la description détaillée d'un mode de réalisation particulier de l'invention, en référence aux figures des dessins annexés parmi lesquelles :
- la figure 1 est un schéma de principe de mise en oeuvre du procédé de l'invention ;
- la figure 2 est une vue schématique d'un spectre asymétrique résultant d'une longueur de cavité inadaptée.

### DESCRIPTION DETAILLEE D'UN MODE DE REALISATION DE L'INVENTION

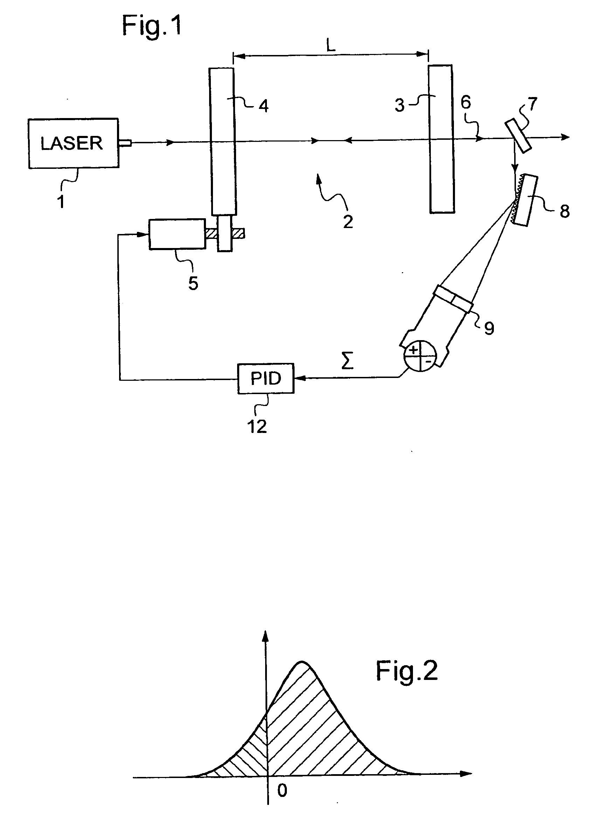

En référence à la figure 1, le procédé est mis en oeuvre ici en application à un laser à impulsions. Ici, le laser 1 délivre un faisceau incident prenant la forme d'impulsions d'une durée de 100 femtosecondes, centrées sur une longueur d'onde de 800 nanomètres, à un taux de répétition de 75 mégahertz, formant ainsi un peigne de fréquences. Le faisceau est envoyé vers une cavité de Fabry-Perot 2 comportant un miroir fixe 3 et un miroir mobile 4, pouvant être approché ou éloigné du miroir fixe à l'aide d'un actionneur 5. Ici, la distance L entre les miroirs est de sensiblement 4 mètres. Le faisceau ayant pénétré dans la cavité subit une multitude de réflexions sur les deux miroirs en regard. La cavité 2 transmet un faisceau de sortie 6 dont les caractéristiques peuvent être analysées.

Selon l'invention, on prélève une partie du faisceau émis 6 à l'aide d'un séparateur 7, pour éclairer un réseau de diffraction 8. Le faisceau diffracté est reçu sur une photodiode à quadrants 9 qui comporte deux zones sensibles qui génèrent respectivement des signaux 10,11 électriques proportionnels à l'intensité du rayonnement reçu par la zone correspondante. Les deux signaux sont soustraits l'un à l'autre pour définir un signal d'erreur qui forme l'entrée d'un correcteur 12, en l'occurrence ici un PID, dont la sortie forme un signal de commande de l'actionneur 5. Ainsi, la distance L est asservie à une valeur L* pour laquelle le signal d'erreur est nul, ce qui correspond à un spectre centré frappant de façon équilibrée les deux zones sensibles de la photodiode 9.

A la figure 2 est illustrée le spectre d'un faisceau émis lorsque la distance L est différente de la distance de résonnance L*. Le spectre est décalé (ici vers la droite), ce qui le rend asymétrique et donne naissance à un signal d'erreur non nul. Le procédé de stabilisation décrit ci-dessus permet de ramener la distance L de la cavité à la valeur L* pour laquelle le spectre est symétrique (à des erreurs de traînage près, bien connues dans les asservissements).

La distance L* ainsi maintenue est égale en pratique à la distance correspondant à la résonnance fondamentale Lr augmentée de quelques longueurs d'ondes. En effet, pour une telle distance, le signal d'erreur change de signe lorsque la distance L franchit la valeur L*, ce qui permet de changer le sens du déplacement du miroir mobile lors que distance L franchit la valeur L*. On remarquera qu'un tel changement de signe n'est normalement pas observé autour de la distance Lr de résonnance fondamentale. Cependant, le décalage est minime et parfaitement acceptable (quelques microns, à comparer avec une distance de plusieurs mètres).

Le procédé de l'invention est particulièrement simple à mettre en oeuvre, avec des moyens peu onéreux.

L'invention n'est bien sûr pas limitée à ce qui vient d'être décrit, mais englobe toute variante entrant dans le cadre défini par les revendications.

En particulier, bien que le procédé de stabilisation de l'invention ait été illustré en application à une cavité optique passive, il est bien sûr applicable à des cavités optiques actives, comportant par exemple un cristal non linéaire, ou des cavités comportant un échantillon à analyser par spectroscopie.

Bien que le correcteur utilisé soit ici un PID, on pourra bien sûr utiliser d'autres correcteurs, soit plus simples (un simple correcteur proportionnel), soit plus complexe, par exemple un correcteur H∞. De façon générale, on élaborera le signal d'erreur en constatant une asymétrie dans le spectre de la lumière émise par la cavité, comme ici à l'aide d'une photodiode à quadrants, ou à l'aide de tout dispositif sensible à une telle asymétrie.

Bien que l'on ait indiqué que l'on repérait le décalage spectral au moyen d'une photodiode à quadrants, l'invention n'est pas limitée à l'utilisation d'une telle photodiode, et tout moyen permettant de générer un signal représentatif d'un décalage spectral pourra être utilisé.

Enfin, bien que l'on ait indiqué que l'on s'intéressait au spectre de la lumière émise par la cavité, on pourra également appliquer le procédé en surveillant le spectre de la lumière réfléchie par la cavité vers la source de lumière.

## Revendications

1. Procédé de stabilisation de la distance (L) entre deux miroirs (3,4) d'une cavité optique (2), le procédé comportant les étapes de :
- injecter dans la cavité un faisceau lumineux incident sous la forme d'un peigne de fréquences ;
- observer le spectre de la lumière transmise ou de la lumière réfléchie par la cavité à l'aide d'une photodiode à au moins deux zones sensibles disposée par rapport à la lumière transmise ou réfléchie de sorte que lorsque le spectre est centré, les deux zones sensibles de la photodiode sont également éclairées;
- modifier la distance entre les miroirs de la cavité de façon à annuler un décalage dudit spectre par rapport à une situation dans laquelle ledit spectre est centré.

2. Procédé selon la revendication 1, dans lequel on élabore un signal d'erreur (ε) représentatif du décalage spectral du spectre en soustrayant entre eux des signaux (10, 11) générés respectivement par les deux zones sensibles de la photodiode, ce signal d'erreur étant utilisé pour commander un actionneur de déplacement de l'un des miroirs de la cavité.

## Claims

1. A method of stabilizing the distance (L) between two mirrors (3, 4) of an optical cavity (2), the method comprising the steps of:
• injecting into the cavity an incident light beam in the form of a comb of frequencies;
• observing the spectrum of the light emitted or reflected by the cavity by using a photodiode having at least two sensitive zones that are arranged relative to the emitted or reflected light in such a manner that when the spectrum is centered, the two sensitive zones of the photodiode are illuminated equally; and
• modifying the distance between the mirrors of the cavity so as to cancel any offset of said spectrum relative to a situation in which said spectrum is centered.

2. A method according to claim 1, wherein an error signal (ε) is generated that is representative of the spectral offset of the spectrum by taking the difference between signals (10, 11) generated respectively by the two sensitive zones of the photodiode, the error signal being used to control an actuator for moving one of the mirrors of the cavity.

## Patentansprüche

1. Verfahren zur Stabilisierung des Abstandes (L) zwischen zwei Spiegeln (3, 4) einer optischen Kavität (2), wobei das Verfahren die folgenden Schritte umfasst:
- Einkoppeln eines in Form eines Frequenzkammes einfallenden Lichtstrahls in die Kavität;
- Beobachten des Spektrums des übertragenen oder durch die Kavität reflektierten Lichts mit Hilfe einer Photodiode mit mindestens zwei sensiblen Zonen, wobei die Photodiode relativ zum übertragenen oder reflektierten Licht derart angeordnet ist, dass die beiden sensiblen Zonen der Photodiode gleichermaßen beleuchtet sind, wenn das Spektrum zentriert ist;
- Modifizieren des Abstands zwischen den Spiegeln der Kavität in der Weise, dass eine Verschiebung des besagten Spektrums relativ zu einer Situation, bei der das besagte Spektrum zentriert ist, aufgehoben wird.

2. Verfahren nach Anspruch 1, bei dem ein Fehlersignal (ε) erstellt wird, das repräsentativ für die Spektralverschiebung des Spektrums ist, indem untereinander jeweils durch die beiden sensiblen Zonen der Photodioden erzeugte Signale (10, 11) voneinander subtrahiert werden, wobei dieses Fehlersignal verwendet wird, um ein Verlagerungsstellglied zum Verlagern eines der Spiegel der Kavität zu steuern.
